## Europäisches Patentamt
## European Patent Office
## Office européen des brevets

(11) Veröffentlichungsnummer: **0 063 762**
**B1**

(12) **EUROPÄISCHE PATENTSCHRIFT**

(45) Veröffentlichungstag der Patentschrift:
03.07.85

(21) Anmeldenummer: 82103216.6

(22) Anmeldetag: 16.04.82

(51) Int. Cl.⁴: **F 16 K 3/08,** F 16 K 27/00,
F 16 K 11/06, C 04 B 35/56

(54) Ventilscheibe.

(30) Priorität: 28.04.81 DE 3116801

(43) Veröffentlichungstag der Anmeldung:
03.11.82 Patentblatt 82/44

(45) Bekanntmachung des Hinweises auf die Patenterteilung:
03.07.85 Patentblatt 85/27

(84) Benannte Vertragsstaaten:
CH DE FR GB IT LI SE

(56) Entgegenhaltungen:
EP - A - 0 064 606
DE - A - 1 550 060
DE - A - 1 949 318
DE - B - 1 090 565
DE - B - 1 282 377
DE - B - 1 291 957
US - A - 3 275 722
US - A - 3 837 356

CERAMIC BULLETIN, Band 54, Nr. 12, Dezember 1979,
American Ceramic Society, Seiten 1054-1056,
Columbus, Ohio, USA W.B. HILLIG et al. "Silicon/Silicon
carbide composites"

(73) Patentinhaber: Hoechst CeramTec Aktiengesellschaft,
Wilhelmstrasse 14, D-8672 Selb (DE)

(72) Erfinder: Burghardt, Helmut Werner, Hauptstrasse 8,
D-8671 Schönwald (DE)

(74) Vertreter: Altenburg, Udo, Dipl.-Phys. et al, Patent- und
Rechtsanwälte Bardehle-Pagenberg-Dost-Altenburg &
Partner Postfach 86 06 20, D-8000 München 86 (DE)

## Beschreibung

Die vorliegende Erfindung betrifft eine Ventilscheibe aus Siliciumcarbidmaterial gemäss Oberbegriff des Anspruchs 1.

Bekannte Ventilscheiben, insbesondere für Wasserarmaturen, bestehen normalerweise aus oxidkeramischem Material (z.B. DE-B-1 282 377 und DE-B-1 291 857). Ausserdem sind Ventilscheiben aus Siliciumcarbidmaterial bekannt (z.B. US-A-3 837 356). In der DE-B-1 090 565 wird der Einfluss des Kohlenstoffgehalts auf die Silicierung beschrieben, wobei der Gehalt an freiem Silicium unter 8% liegt.

Die Aufgabe der vorliegenden Erfindung besteht darin, eine Ventilscheibe aus einem homogenen polykristallinen Siliciumcarbidmaterial zu schaffen, das aus einem Gerüstkörper aus zumindestens 70 Gew.-% Siliciumcarbid besteht und dessen Hohlräume porenfrei mit Silicium gefüllt sind.

Diese Aufgabe wird bei einer Ventilscheibe gemäss Oberbegriff des Anspruchs 1 erfindungsgemäss durch die Merkmale des kennzeichnenden Teils des Anspruchs 1 gelöst. Ventilscheiben aus dem erfindungsgemässen Siliciumcarbidmaterial sind besonders homogen, haben eine grosse Festigkeit auch bei hohen Temperaturen, gute Thermoschockbeständigkeit und hohe Korrosionsfestigkeit.

In der EP-A-64 606 mit gleichem Prioritätstag ist allgemein ein homogener Formkörper aus einem Siliciumcarbidmaterial gemäss der vorliegenden Erfindung offenbart.

Das erfindungsgemässe Siliciumcarbidmaterial weist vorzugsweise folgende Eigenschaften auf:

| | |
|---|---|
| Dichte im gesinterten Zustand | 2,95 bis 3,06 g/cm$^3$ |
| Oberflächenrauheit | Ra 0,1 bis 0,15 $\mu$ |
| Reibungskoeffizient | 0,1 bis 0,5 |
| E-Modul | 170 000 bis 300 000 N/mm$^2$ |
| Wärmeleitfähigkeit | 0,45 bis 1,0 W/cm K |
| Ausdehnungskoeffizient | 4,6 × 10$^{-6}$/K |

## Patentansprüche

1. Ventilscheibe aus Siliciumcarbidmaterial für Steuerelemente zur Regelung von Flüssigkeitsströmen, insbesondere für sanitäre Mischventile, dadurch gekennzeichnet, dass das Siliciumcarbidmaterial aus 70 bis 90 Gew.-% Siliciumcarbid und 8 bis 30 Gew.-% Silicium mit einem Gehalt an freiem Kohlenstoff von maximal 0,2 Gew.-% besteht und einen Volumenanteil an geschlossenen Poren von maximal 0,1% enthält.

2. Ventilscheibe nach Anspruch 1, dadurch gekennzeichnet, dass das Siliciumcarbidmaterial im gesinterten Zustand eine Dichte von 2,95 bis 3,05 g/cm$^3$ aufweist.

3. Ventilscheibe nach Anspruch 1 oder 2, dadurch gekennzeichnet, dass das Siliciumcarbidmaterial eine Oberflächenrauheit von Ra 0,1 bis 0,15 $\mu$ aufweist.

4. Ventilscheibe nach mindestens einem der Ansprüche 1 bis 3, dadurch gekennzeichnet, dass das Siliciumcarbidmaterial einen Reibungskoeffizienten von 0,1 bis 0,5 aufweist.

5. Ventilscheibe nach mindestens einem der Ansprüche 1 bis 4, dadurch gekennzeichnet, dass das Siliciumcarbidmaterial einen E-Modul von 170 000 bis 300 000 N/mm$^2$ aufweist.

6. Ventilscheibe nach mindestens einem der Ansprüche 1 bis 5, dadurch gekennzeichnet, dass das Siliciumcarbidmaterial eine Wärmeleitfähigkeit von 0,45 bis 1,0 W/cm K aufweist.

7. Ventilscheibe nach mindestens einem der Ansprüche 1 bis 6, dadurch gekennzeichnet, dass das Siliciumcarbidmaterial einen Ausdehnungskoeffizienten von 4,6 × 10$^{-6}$/K aufweist.

## Claims

1. A valve member made of silicon carbide material for control elements to regulate liquid flows, particularly for sanitary mixing valves, characterized in that the silicon carbide material is made of 70 to 90 weight percent silicon carbide and 8 to 30 weight percent silicon with a content of free carbon of maximum 0.2 weight percent and contains a volume part of closed pores of maximum 0.1 percent.

2. Valve member according to claim 1, characterized in that the silicon carbide material has a density of 2.95 to 3.05 g/cm$^2$ in the sintered state.

3. Valve member according to claim 1 or 2, characterized in that the silicon carbide material has a surface roughness of Ra 0.1 to 0.15 $\mu$.

4. Valve member according to at least one of claims 1 to 3, characterized in that the silicon carbide material has a friction constant of 0.1 to 0.5.

5. Valve member according to at least one of claims 1 to 4, characterized in that the silicon carbide material has an elasticity modulus of 170,000 to 300,000 N/mm$^2$.

6. Valve member according to at least one of claims 1 to 5, characterized in that the silicon carbide material has a heat conductivity of 0.45 to 1.0 W/cm K.

7. Valve member according to at least one of claims 1 to 6, characterized in that the silicon carbide material has an expansion constant of 4.6 × 10$^{-6}$/K.

## Revendications

1. Vanne à plateau en matériau à base de carbure de silicium pour élément de commande pour la régulation de courants liquides, en particulier pour vanne mélangeuse sanitaire, caractérisée par le fait que le matériau à base de carbure de silicium est constitué de 70 à 90% en poids de carbure de silicium et de 8 à 30% en poids de silicium avec une teneur en carbone libre d'au maximum 0,2% en poids, ledit matériau contenant une proportion en volume de pores fermés d'au maximum 0,1%.

2. Vanne à plateau selon la revendication 1, caractérisée par le fait que le matériau à base de carbure de silicium présente à l'état fritté une densité de 2,95 à 3,05 g/cm³.

3. Vanne à plateau selon la revendication 1 ou 2, caractérisée par le fait que le matériau à base de carbure de silicium présente une rugosité de surface Ra de 0,1 à 0,15 μ.

4. Vanne à plateau selon au moins l'une des revendications 1 à 3, caractérisée par le fait que le matériau à base de carbure de silicium présente un coefficient de frottement de 0,1 à 0,5.

5. Vanne à plateau selon au moins l'une des revendications 1 à 4, caractérisée par le fait que le matériau à base de carbure de silicium présente un module d'élasticité de 170 000 à 300 000 N/mm².

6. Vanne à plateau selon au moins l'une des revendications 1 à 5, caractérisée par le fait que le matériau à base de carbure de silicium présente une conductibilité de la chaleur de 0,45 à 1,0 W/cm K.

7. Vanne à plateau selon au moins l'une des revendications 1 à 6, caractérisée par le fait que le matériau à base de carbure de silicium présente un coefficient de dilatation de $4,6 : 10^{-6}$/K.